# EUROPÄISCHE PATENTSCHRIFT

(11) **EP 2 836 543 B1**
(45) Veröffentlichungstag und Bekanntmachung des Hinweises auf die Patenterteilung: **04.03.2020**
(21) Anmeldenummer: 13720822.9
(22) Anmeldetag: 12.04.2013
(51) Int. Cl.: C08J 9/12, C08J 9/16, C08G 18/66, C08G 18/76, C08G 18/08

(54) **VERFAHREN ZUR HERSTELLUNG VON EXPANDIERTEM GRANULAT**
METHOD FOR PRODUCING EXPANDED GRANULES
PROCÉDÉ DE PRODUCTION DE GRANULÉS EXPANSÉS

(30) Priorität: 13.04.2012 EP 12164076
(43) Veröffentlichungstag der Anmeldung: 18.02.2015
(60) Teilanmeldung: 19180591.0
(73) Patentinhaber: BASF SE, 67056 Ludwigshafen am Rhein (DE)
(72) Erfinder: RUDOLPH, Hans, 49152 Bad Essen (DE); KLOSTERMANN, Rainer, 32369 Rahden (DE); KAMINSKY, Torben, 49448 Lemförde (DE); LOHAUS, Bernd, 49453 Hemsloh (DE); AHLERS, Jürgen, 68649 Groß-Rohrheim (DE); SCHMIED, Bernhard, 67227 Frankenthal (DE); GUTMANN, Peter, 76199 Karlsruhe (DE); HAHN, Klaus, 67281 Kirchheim (DE); PRISSOK, Frank, 49448 Lemförde (DE); MARTEN, Elke, 49179 Ostercappeln (DE); DÄSCHLEIN, Christian, 68199 Mannheim (DE)
(74) Vertreter: BASF IP Association
(86) Internationale Anmeldenummer: PCT/EP2013/057655
(87) Internationale Veröffentlichungsnummer: WO 2013/153190

(56) Entgegenhaltungen:
- EP-A1- 1 266 928
- EP-A1- 2 565 224
- WO-A1-2007/082838
- WO-A1-2012/062682
- WO-A2-2011/086030

## Beschreibung

Die Erfindung betrifft ein Verfahren zur Herstellung von expandiertem Granulat aus einer treibmittelhaltigen Polymerschmelze. Expandiertes Granulat aus thermoplastischen Polymeren, insbesondere aus thermoplastischem Polyurethan (TPU), kann aufgrund der elastischen und tribologischen Eigenschaften in unterschiedlichsten Anwendungen eingesetzt werden. Expandierte Granulate aus thermoplastischem Polyurethan können beispielsweise für wiederverwendbare Gymnastikmatten, Körperprotektoren, Auskleidungselemente im Automobilbau, Schall- und Schwingungsdämpfer, Verpackungen oder in Schuhsohlen verwendet werden. In allen diesen Bereichen sind eine hohe Elastizität und eine gute Homogenität der Partikel des Granulats von entscheidender Bedeutung.

Schaumstoffe, insbesondere auch Partikelschaumstoffe, sind seit langem bekannt und in der Literatur vielfach beschrieben, zum Beispiel in Ullmanns "Enzyklopädie der technischen Chemie", 4. Auflage, Band 20, Seite 416 ff.

Aus der WO 2007/082838 A1 ist ein Verfahren zur Herstellung von expandiertem, treibmittelhaltigen thermoplastischen Polyurethan bekannt. Darin wird in einem ersten Schritt ein thermoplastisches Polyurethan zu einem Granulat extrudiert. In einem zweiten Schritt wird das Granulat in wässriger Suspension unter Druck mit einem Treibmittel imprägniert und in einem dritten Schritt expandiert. In einer weiteren Ausführungsform des Verfahrens wird das thermoplastische Polyurethan zusammen mit einem Treibmittel in einem Extruder aufgeschmolzen und die Schmelze ohne eine Vorrichtung, die ein Aufschäumen verhindert, granuliert. Bei der Herstellung mit Extrusionsverfahren werden als Treibmittel flüchtige organische Verbindungen verwendet.

Auch aus WO 2011/086030 A2 sind expandierbare Granulate bekannt. In diesen expandierbaren Granulaten ist ein organisches Treibmittel eingeschlossen. Ein vorzeitiges Aufschäumen während der Granulierung wird durch eine druckbeaufschlagte Unterwassergranulierung verhindert. Ein Aufschäumen bzw. ein Expandieren erfolgt erst in einer der Granulierung nachfolgenden Behandlung, beispielsweise unter Einwirkung von Heißluft oder heißem Wasserdampf.

Die Verwendung eines Extrusionsverfahrens zur Herstellung expandierter Granulate aus TPU ermöglicht eine kontinuierliche Herstellung und damit eine schnelle Verarbeitung unterschiedlichster Härtegrade sowie den schnellen Wechsel weiterer Eigenschaften, wie beispielsweise der Farbe der produzierten expandierten Partikel.

Bei der direkten Herstellung von expandierten Granulaten mittels Extrusion stellt sich jedoch das Problem ein, dass beim Aufschäumen der Partikel keine geschlossene Haut entsteht, und die expandierten Partikel in sich zusammenfallen, so dass Partikel mit geringer Schüttdichte nicht hergestellt werden können. Ebenfalls nachteilig ist, dass die eingesetzten Treibmittel brennbar sind und aufgrund einer vorhandenen Explosionsgefahr schwierig zu verarbeiten sind. Des Weiteren müssen die hergestellten expandierten Granulate vor der Auslieferung gelagert werden, bis sich das eingesetzte brennbare Treibmittel verflüchtigt hat.

Eine Aufgabe der vorliegenden Erfindung ist es, ein Verfahren zur Herstellung von expandiertem Granulat aus einer treibmittelhaltigen Polymerschmelze bereit zu stellen, bei dem expandierte Granulatkörner mit einer geschlossenen Haut entstehen, das die aus dem Stand der Technik bekannten Nachteile nicht aufweist.

Gelöst wird die Aufgabe durch ein Verfahren zur Herstellung von expandiertem Granulat aus einer treibmittelhaltigen Polymerschmelze enthaltend ein thermoplastisches Polyurethan, umfassend die Schritte:
a) Pressen der treibmittelhaltigen Polymerschmelze durch eine auf eine Temperatur zwischen 150°C und 280 °C temperierte Lochplatte in eine Granulierkammer,
b) Zerkleinern der durch die temperierte Lochplatte gepressten Polymerschmelze mit einer Schneidevorrichtung in einzelne expandierende Granulatkörner,
c) Austragen der Granulatkörner aus der Granulierkammer mit einem Flüssigkeitsstrom,
wobei das Treibmittel CO₂ oder N₂ oder eine Kombination aus CO₂ und N₂ enthält und die Granulierkammer von einer auf eine Temperatur zwischen 10 °C und 60 °C temperierten Flüssigkeit durchströmt wird, deren Druck 0,7 bar bis 20 bar oberhalb des Umgebungsdrucks liegt und wobei Druck und Temperatur der Flüssigkeit in der Granulierkammer, sowie die Temperatur der Lochplatte so gewählt werden, dass die Granulatkörner in der unter Druck stehenden Flüssigkeit durch das enthaltende Treibmittel so expandiert werden, dass expandierte Granulatkörner mit einer geschlossenen Haut entstehen, wobei die Schüttdichte des expandierten Granulats zwischen 30 g/l und 250 g/l liegt und wobei die Temperatur der Flüssigkeit in der Granulierkammer bei einer unkontrollierten Expansion des Granulats, bei der keine geschlossene Haut ausgebildet wird, gesenkt und bei ausbleibender oder zu geringer Expansion des Granulats erhöht wird und wobei die Temperatur der Lochplatte bei einer unkontrollierten Expansion des Granulats, bei der keine geschlossene Haut ausgebildet wird, gesenkt und bei ausbleibender oder zu geringer Expansion des Granulats erhöht wird.

Im Schritt a) des Verfahrens wird ein Polymer geschmolzen, mit einem Treibmittel sowie gegebenenfalls weiteren Zusatzstoffen vermischt und anschließend durch die Lochplatte gedrückt. Dies erfolgt im Allgemeinen mit Hilfe eines Extruders und/oder einer Schmelzepumpe. Bei Verwendung eines Extruders, beispielsweise eines Doppelschneckenextruders, wird zunächst das Polymer plastifiziert und gegebenenfalls mit Hilfsstoffen vermischt. Während des Mischens wird das im Extruder enthaltene Material in Richtung der temperierten Lochplatte transportiert. Falls das Treibmittel nicht bereits am Anfang mit dem Polymer in den Extruder eingegeben wurde, kann dieses dem Material nach Durchlaufen einer Teilstrecke im Extruder zugegeben werden. Das Treibmittel und das Polymer werden beim Durchlaufen der restlichen Extruderstrecke vermischt. Dabei wird die Schmelze auf die für die anschließende Granulierung erforderliche Temperatur gebracht. Der für das Pressen der Schmelze durch die Lochplatte erforderliche Druck kann beispielsweise mit einer Schmelzpumpe aufgebracht werden. Der für die Granulierung erforderliche Druck und die notwendige Temperatur der Schmelze sind abhängig von dem verwendeten Polymer sowie der verwendeten Hilfsstoffe und des verwendeten Treibmittels und sind des Weiteren abhängig von dem Mischungsverhältnis der Komponenten zueinander. Durch die temperierte Lochplatte gelangt die Polymerschmelze in die Granulierkammer. Durch die Granulierkammer strömt eine temperierte Flüssigkeit, deren Druck 0,7 bar bis 20 bar oberhalb des Umgebungsdrucks liegt.

In der Granulierkammer wird das durch die temperierte Lochplatte gedrückte Polymer zu Strängen geformt, die mit einer Schneidevorrichtung in einzelne expandierende Granulatkörner zerkleinert werden. Die Schneidevorrichtung kann beispielsweise als schnell rotierendes Messer ausgeführt sein. Die Form der entstehenden Granulatkörner ist zum einen abhängig von der Form und Größe der Öffnungen in der Lochplatte, zum anderen ist die Form abhängig von dem Druck, mit dem die Schmelze durch die Löcher der Lochplatte gedrückt wird und der Geschwindigkeit der Schneidevorrichtung. Bevorzugt werden der Einpressdruck, die Geschwindigkeit der Schneidevorrichtung und die Größe der Öffnungen in der Lochplatte so gewählt, dass die Form der Granulatkörner im Wesentlichen sphärisch ist.

Im letzten Schritt des Verfahrens werden die Granulatkörner mit Hilfe der durch die Granulierkammer strömenden temperierten Flüssigkeit aus der Granulierkammer ausgetragen. Der Druck und die Temperatur der temperierten Flüssigkeit sind dabei so gewählt, dass die Polymerstränge/Granulatkörner durch das enthaltende Treibmittel kontrolliert expandiert werden und eine geschlossene Haut an der Oberfläche der Granulatkörner erzeugt wird.

Zusammen mit der temperierten Flüssigkeit strömt das Granulat in einen Trockner, wo es von der Flüssigkeit getrennt wird. Das fertige expandierte Granulat wird in einem Behälter aufgefangen, während die Flüssigkeit gefiltert wird und über eine Druckpumpe wieder in die Granulierkammer geleitet wird.

Durch die Granulierung in einer unter Druck stehenden Flüssigkeit mit kontrollierter Flüssigkeitstemperatur, wird vermieden, dass die treibmittelhaltige Polymerschmelze unkontrolliert expandiert, ohne dass sich eine geschlossene Haut ausbilden kann. Solche Partikel würden zwar anfangs eine geringe Schüttdichte aufweisen, jedoch schnell wieder in sich zusammen fallen. Das Ergebnis wären inhomogene Partikel von hoher Schüttdichte und geringer Elastizität. Durch das erfindungsgemäße Verfahren wird die Expansion der Granulatkörner kontrolliert verlangsamt, so dass strukturierte Körner entstehen, welche eine geschlossene Haut besitzen und in ihrem Inneren eine zellige Struktur aufweisen, wobei die Zellengröße an der Oberfläche gering ist und in Richtung Zentrum zunimmt. Die Größe der Zellen im Zentrum ist kleiner als 250 µm, bevorzugt kleiner als 100 µm. Die Schüttdichte des expandierten Granulats ist im Bereich von 30 g/l bis 250 g/l und ist bevorzugt im Bereich von 80 g/l bis 120 g/l.

Die Expansion des Granulats wird durch Einstellen von Druck und Temperatur der temperierten Flüssigkeit in der Granulierkammer, sowie durch Einstellen der Temperatur der Lochplatte kontrolliert. Expandieren die Granulatkörner zu schnell beziehungsweise unkontrolliert, so dass sich keine geschlossene Haut bildet, wird der Druck der Flüssigkeit in der Granulierkammer erhöht und/oder die Temperatur der temperierten Flüssigkeit in der Granulierkammer abgesenkt. Der vergrößerte Druck der die Granulatkörner umgebenden temperierten Flüssigkeit wirkt der Expansionswirkung des Treibmittels entgegen und bremst die Expansion des Granulats. Die Verringerung der Temperatur der temperierten Flüssigkeit in der Granulierkammer bewirkt eine dickere Haut der Partikel und bietet der Expansion somit mehr Widerstand. Bei einem im Verhältnis zum verwendeten Treibmittel zu hohen Flüssigkeitsdruck oder einer zu niedrigen Temperatur der temperierten Flüssigkeit, kann ein Expandieren der Granulatkörner zu stark behindert oder gar vollständig unterbunden werden, so dass Granulat mit zu großer Schüttdichte entsteht. In diesem Fall wird der Druck der temperierten Flüssigkeit in der Granulierkammer abgesenkt und/oder die Temperatur der temperierten Flüssigkeit angehoben.

Bei der Herstellung von expandiertem Granulat aus den treibmittelhaltigen Polymerschmelzen liegt der Druck in der die Granulierkammer durchströmenden temperierten Flüssigkeit vorzugsweise zwischen 0,7 bar und 20 bar. Bevorzugt liegt der Druck in der Flüssigkeit zwischen 5 und 15 bar, besonders wird ein Druck zwischen 10 und 15 bar bevorzugt.

Zusätzlich oder alternativ zur Anpassung des Drucks und/oder der Temperatur der temperierten Flüssigkeit in der Granulierkammer kann die Expansion der Granulatkörner auch über die Temperatur der temperierten Lochplatte beeinflusst werden. Durch Absenken der Temperatur der temperierten Lochplatte kann Wärme aus der Polymerschmelze schneller an die Umgebung abgegeben werden. Dadurch wird die Bildung einer geschlossenen Haut, die Voraussetzung für ein stabiles, geschäumtes Granulatkorn ist, gefördert. Wird die Temperatur der temperierten Lochplatte und/oder der Flüssigkeit in der Granulierkammer zu niedrig gewählt, kühlt die Polymerschmelze zu schnell aus und verfestigt sich, bevor eine ausreichende Expansion einsetzen kann. Die Expansion des Granulatkorns durch das enthaltende Treibmittel wird so erschwert, dass Granulat mit einer zu hohen Schüttdichte entsteht. Deswegen werden die Temperatur der temperierten Flüssigkeit in der Granulierkammer und/oder die Temperatur der temperierten Lochplatte in einem solchen Fall erhöht.

Die Temperatur der Flüssigkeit in der Granulierkammer liegt vorzugsweise zwischen 10 °C und 60 °C, um eine kontrollierte Expansion der Granulatkörner, bei der eine geschlossene Schaumhaut ausgebildet wird, zu erlauben. Bevorzugt liegt die Temperatur der Flüssigkeit zwischen 25 °C und 45 °C. Die Temperatur der temperierten Lochplatte liegt vorzugsweise zwischen 150°C und 280°C, bevorzugt wird eine Temperatur der Lochplatte zwischen 220°C und 260°C, besonders bevorzugt wird ein Temperaturbereich der temperierten Lochplatte von 245 °C bis 255 °C.

Eine zu hohe Lochplattentemperatur führt zu einer dünnen Haut auf der Oberfläche der Partikel und einem späteren Kollabieren der Oberfläche. Zu niedrige Lochplattentemperaturen verringern den Expansionsgrad und führen zu dicken, ungeschäumten Partikeloberflächen.

Mit dem erfindungsgemäßen Verfahren können expandierte Granulate aus thermoplastischen Elastomeren, thermoplastischen Elastomeren mit Blockcopolymerstruktur, Polyetheramid, Polyetherester, Polyesterester oder einem Polyurethan hergestellt werden. Erfindungsgemäß werden die expandierten Granulate aus thermoplastischem Polyurethan hergestellt.

Das thermoplastische Polyurethan kann jedes beliebige, dem Fachmann bekannte thermoplastische Polyurethan sein. Thermoplastische Polyurethane und Verfahren zu deren Herstellung sind bereits vielfach beschrieben, beispielsweise in Gerhard W. Becker und Dietrich Braun, Kunststoffhandbuch, Band 7, "Polyurethane", Carl Hanser Verlag, München, Wien, 1993.

In einer bevorzugten Ausführungsform wird das thermoplastische Polyurethan durch Umsetzung aus einer Mischung von Isocyanaten mit gegenüber Isocyanaten reaktiven Verbindungen, bevorzugt mit einem Molekulargewicht von 0,5 kg/mol bis 10 kg/mol und gegebenenfalls Kettenverlängerungsmitteln, bevorzugt mit einem Molekulargewicht von 0,05 kg/mol bis 0,5 kg/mol hergestellt. In einer weiteren bevorzugten Ausführungsform wird zur Herstellung des thermoplastischen Polyurethans der Mischung weiterhin mindestens ein Kettenregler, ein Katalysator und gegebenenfalls mindestens ein Füll-, Hilfs- und/oder Zusatzstoff zugesetzt.

Zur Herstellung von thermoplastischem Polyurethan wird auf jeden Fall eine Mischung aus Isocyanaten und gegenüber Isocyanaten reaktiven Verbindungen benötigt. Der weitere Zusatz der Kettenverlängerungsmittel, Kettenregler, Katalysatoren und Füll-, Hilfs- und/oder Zusatzstoffe ist optional und kann einzeln oder in allen möglichen Variationen erfolgen.

In bevorzugten Ausführungsformen werden als organische Isocyanate aliphatische, cycloaliphatische, araliphatische und/oder aromatische Isocyanate eingesetzt. Besonders bevorzugt werden aromatische, aliphatische und/oder cycloaliphatische Diisocyanate verwendet. Beispiele für bevorzugte Diisocyanate sind Trimethylendiisocyanat, Tetramethylendiisocyanat, Pentamethylendiisocyanat, Hexamethylendiisocyanat, Heptamethylendiisocyanat, Oktamethylendiisocyanat; 2-Mehtylpentamethylendiisocyanat-1,5; 2-Ethylbutylendiisocyanat-1,4; Pentamethylendiisocyanat-1,5; Butylendiisocyanat-1,4; 1-Isocyanato-3,3,5-trimethyl-5-isocyanatomethylcyclohexan; 1,4-Bis(isocyanatomethyl)cyclohexan; 1,3-Bis(isocyanatomethyl)cyclohexan; 1,4-Cyclohexandiisocyanat; 1-Methyl-2,4-cyclohexandiisocynat, 1-Methyl-2,6-cyclohexandiisocyanat, 2,2'-Dicyclohexylmethandiisocyanat, 2,4'-Dicyclohexylmethandiisocyanat, 4,4'-Dicyclohexylmethandiisocyanat, 2,2'-Diphenylmethandiisocyanat; 2,4'-Diphenylmethandiisocyanat, 4,4'-Diphenylmethandiisocyanat; 1,5-Naphthylendiisocyanat; 2,4-Toluylendiisocyanat; 2,6-Toluylendiisocyanat; Diphenylmethandiisocyanat; 3,3'-Dimethyldiphenyl-diisocyanat; 1,2-Diphenylethandiisocyanat und Phenylendiisocyanat.

Neben dem Isocyanat ist die thermoplastische Formmasse aufgebaut aus einer Verbindung mit mindestens zwei mit Isocyanatgruppen reaktiven wasserstoffhaltigen Gruppen. Hierbei ist die mit der Isocyanatgruppe reaktive wasserstoffhaltige Gruppe vorzugsweise eine Hydroxylgruppe. Besonders bevorzugt ist die Verbindung mit mindestens zwei mit Isocyanatgruppen reaktiven wasserstoffhaltigen Gruppen ausgewählt aus Polyetherol, Polyesterol und Polycarbonatdiol. Hierbei werden Polyesterole, Polyetherole und/oder Polycarbonatdiole üblicherweise auch unter dem Begriff "Polyole" zusammengefasst.

Bevorzugt wird das thermoplastische Polyurethan aus Polyetheralkohol hergestellt. Hierbei wird besonders bevorzugt Polyetherdiol verwendet. Ein besonders bevorzugtes Polyetherdiol ist Polytetrahydrofuran. Bevorzugt werden die Polyetheralkohole und Polytetrahydrofuran mit einem Molekulargewicht zwischen 0,6 kg/mol und 2,5 kg/mol verwendet. Die Polyetheralkohole werden einzeln oder auch als Mischung verschiedener Polyetheralkohole eingesetzt.

In einer alternativen Ausführungsform wird zur Herstellung des thermoplastischen Polyurethans ein Polyesteralkohol verwendet. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht zwischen 0,6 kg/mol und 2,5 kg/mol auf.

In weiter bevorzugten Ausführungsformen haben die zur Herstellung des thermoplastischen Polyurethans eingesetzten Polyole Molekulargewichte von 0,5 kg/mol bis 8 kg/mol, mehr bevorzugt von 0,6 kg/mol bis 6 kg/mol und insbesondere von 0,8 kg/mol bis 4 kg/mol. In weiter bevorzugten Ausführungsformen weisen die Polyole eine mittlere Funktionalität von 1,8 bis 2,3, weiter bevorzugt von 1,9 bis 2,2 und insbesondere von 2 auf. In einer besonders bevorzugten Ausführungsform ist das Polyol ein Polyesteralkohol, bevorzugt aus Polytetrahydrofuran synthetisiert und hat in einer weiter bevorzugten Ausführungsform ein Molekulargewicht zwischen 0,6 kg/mol und 2,5 kg/mol.

Wenn zur Herstellung des thermoplastischen Polyurethans Kettenverlängerer eingesetzt werden, so sind diese vorzugsweise aliphatische, araliphatische, aromatische und/oder cycloaliphatische Verbindungen, die in weiter bevorzugten Ausführungsformen ein Molekulargewicht von 0,05 kg/mol bis 0,5 kg/mol haben. Die Kettenverlängerer sind zum Beispiel Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Decaalkylenglykole mit 3 bis 8 Kohlenstoffatomen und entsprechende Oligo- und/oder Polypropylenglykole. In weiteren Ausführungsformen zur Herstellung des thermoplastischen Polyurethans werden Mischungen der Kettenverlängerer eingesetzt.

Wenn Kettenregler eingesetzt werden, so weisen diese üblicherweise ein Molekulargewicht von 0,03 kg/mol bis 0,5 kg/mol auf. Kettenregler sind Verbindungen, die gegenüber Isocyanaten nur eine funktionelle Gruppe aufweisen. Beispiele für Kettenregler sind monofunktionelle Alkohole, monofunktionelle Amine, bevorzugt Methylamin und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der Verbindung mit mindestens zwei mit Isocyanatgruppen reaktiven wasserstoffhaltigen Gruppen eingesetzt. Kettenregler werden in Ergänzung zu Kettenverlängerern oder anstelle dieser eingesetzt.

In weiteren Ausführungsformen wird zur Herstellung des thermoplastischen Polyurethans mindestens ein Katalysator verwendet, der insbesondere die Reaktion zwischen den Isocyanatgruppen der Diisocyanate und den gegenüber Isocyanaten reaktiven Verbindungen, bevorzugt Hydroxylgruppen, der Verbindung mit mindestens zwei mit Isocyanatgruppen reaktiven wasserstoffhaltigen Gruppen, der Kettenregler und der Kettenverlängerer beschleunigt. In bevorzugten Ausführungsformen ist der Katalysator ausgewählt aus der Gruppe der tertiären Amine, beispielsweise Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiter bevorzugten Ausführungsformen ist der mindestens eine Katalysator aus der Gruppe der organischen Metallverbindungen ausgewählt und ist, exemplarisch genannt, Titansäureester, eine Eisenverbindung, beispielsweise Eisen-(III)acetylacetonat, eine Zinnverbindung, beispielsweise Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren verwendet. In einer bevorzugten Ausführungsform wird als Katalysator eine Mischung von Katalysatoren in Mengen von 0,0001 Gew.-% bis 0,1 Gew.-%, bezogen auf die Verbindung mit mindestens zwei mit Isocyanatgruppen reaktiven wasserstoffhaltigen Gruppen, bevorzugt der Polyhydroxylverbindung, eingesetzt.

Als Hilfs- und/oder Zusatzstoffe können zum Beispiel Hydrolyseschutzmittel und Flammschutzmittel eingesetzt sein. Weitere Zusatzstoffe und Hilfsstoffe können Standardwerken wie beispielsweise dem bereits vorstehend genannten Gerhard W. Becker und Dietrich Braun, Kunststoffhandbuch, Band 7 "Polyurethane", Carl Hanser Verlag, München, Wien, 1993, entnommen werden.

Neben Katalysatoren, aber auch ohne die Verwendung von Katalysatoren können den Isocyanaten und der Verbindung mit mindestens zwei mit Isocyanatgruppen reaktiven wasserstoffhaltigen Gruppen zur Herstellung des thermoplastischen Polyurethans auch Hydrolyseschutzmittel, beispielsweise Polymere und niedermolekulare Carbodiimide hinzugefügt werden.

In einer weiteren Ausführungsform kann das thermoplastische Polyurethan eine Phosphorverbindung enthalten. In einer bevorzugten Ausführungsform werden als Phosphorverbindungen Organophosphorverbindungen des trivalenten Phosphors, beispielsweise Phosphite und Phosphonite, verwendet. Beispiele für geeignete Phosphorverbindungen sind Triphenylphosphite, Diphenylalkylphosphit, Phenyldialkylphosphit, Tris-(Nonylphenyl)phosphit, Trilaurylphosphit, Trioctadecylphosphit, Distearylpentaerythritoldisphosphit, Tris-(2,4-Di-tert-butylphenyl)phosphit, Diisodecylpentaerythritoldiphosphit, Di-(2,4-Di-tert-butylphenyl)pentaerythritoldiphosphit, Tristearylsorbitoltriphosphit, Tetrakis-(2,4-di-tert-butylphenyl)-4,4'-diphenylylendiphosphonit, Triisodecylphosphit, Diisodecylphenylphosphit und Diphenylisodecylphosphit oder Gemische daraus.

Besonders bevorzugte Ausführungsformen enthalten Phosphorverbindungen, die schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane Phosphorverbindungen geeignet, die besonders schwer hydrolysieren. Bevorzugte Ausführungsformen schwer hydrolysierbarer Phosphorverbindungen sind Dipolypropylenglykolphenylphosphit, Diisodecylphosphit, Triphenylmonodecylphosphit, Triisononylphosphit, Tris-(2,4-di-tert-butylphenyl)phosphit, Tetrakis-(2,4-di-tert-butylphenyl)-4,4'-diphenylylendiphosphonit und Di-(2,4-di-tert-butylphenyl)-pentaeryhtritoldiphosphit oder Gemische davon.

Zur Einstellung der Shore-Härte von thermoplastischen Polyurethanen können die Verbindungen mit mindestens zwei mit Isocyanatgruppen reaktiven wasserstoffhaltigen Gruppen und die Kettenverlängerer in relativ breiten molaren Verhältnissen variiert werden. In bevorzugten Ausführungsformen verhält sich das molare Verhältnis der Verbindungen mit mindestens zwei mit Isocyanatgruppen reaktiven wasserstoffhaltigen Gruppen zum insgesamt eingesetzten Kettenverlängerer wie 10:1 bis 1:10, bevorzugt 5:1 bis 1:8, weiter bevorzugt wie 1:1 bis 1:4, wobei die Härte des thermoplastischen Polyurethans mit zunehmendem Gehalt an Kettenverlängerer ansteigt. Auf diese Weise können Shore-Härten von A44 bis D80 eingestellt werden. Besonders bevorzugt sind Shore-Härten von A44 bis A120. Die Shore-Härten werden bestimmt nach der DIN 53505.

In weiter bevorzugten Ausführungsformen erfolgt die Umsetzung zum thermoplastischen Polyurethan bei üblichen Kennzahlen. Die Kennzahl ist definiert durch das Verhältnis der insgesamt bei der Umsetzung eingesetzten Isocyanatgruppen des aromatischen, aliphatischen und/oder cycloaliphatischen Diisocyanats zu den gegenüber Isocyanaten reaktiven Gruppen, d.h. den aktiven Wasserstoffen der Verbindung mit mindestens zwei mit Isocyanatgruppen reaktiven wasserstoffhaltigen Gruppen und der Kettenverlängerer. Bei einer Kennzahl von 100 kommt auf eine Isocyanatgruppe des aromatischen, aliphatischen und/oder cycloaliphatischen Diisocyanats ein aktives Wasserstoffatom, d.h. eine gegenüber Isocyanaten reaktive Funktion der Verbindung mit mindestens zwei mit Isocyanatgruppen reaktiven wasserstoffhaltigen Gruppen und der Kettenverlängerer. Bei Kennzahlen über 100 liegen mehr Isocyanatgruppen als gegenüber Isocyanaten reaktiven Gruppen, beispielsweise Hydroxylgruppen vor.

In besonders bevorzugten Ausführungsformen erfolgt die Umsetzung zum thermoplastischen Polyurethan bei einer Kennzahl zwischen 60 und 120, weiter bevorzugt bei einer Kennzahl zwischen 80 und 110.

Zusätzlich kann die thermoplastische Formmasse gegebenenfalls mindestens ein Additiv enthalten. Als Additiv werden dabei Füllstoffe, Hilfsstoffe und Zusatzstoffe sowie die vorstehend beschriebenen Kettenregler, Kettenverlängerer und Katalysatoren verstanden. Die Additive können dabei in beliebigen Mischungen eingesetzt werden. Der Anteil der Additive an der Gesamtmasse der thermoplastischen Formmasse liegt vorzugsweise bei 0 bis 80 Gew.-%.

Übliche eingesetzte Hilfsstoffe und Zusatzstoffe sind zum Beispiel oberflächenaktive Substanzen, Flammschutzmittel, Oxidationsstabilisatoren, Gleit- und Entformungshilfen, Farbstoffe und Pigmente, gegebenenfalls zusätzliche weitere Stabilisatoren, zum Beispiel gegen Hydrolyse, Licht, Hitze oder Verfärbung, Verstärkungsmittel und Weichmacher. Wenn Füllstoffe eingesetzt werden, so können diese anorganisch und/oder organisch sein.

Wenn Füllstoffe enthalten sind, so sind diese zum Beispiel organische und anorganische Pulver oder Faserstoffe sowie Mischungen daraus. Als organische Füllstoffe können zum Beispiel Holzmehl, Stärke, Flachs-, Hanf-, Ramie-, Jute-, Sisal-, Baumwoll-, Zellulose- oder Aramidfasern eingesetzt werden. Als anorganische Füllstoffe eignen sich beispielsweise Silikate, Schwerspat, Glaskugeln, Zeolithe, Metalle oder Metalloxide. Besonders bevorzugt werden pulverförmige anorganische Stoffe wie Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, beispielsweise Eisenpulver, Glaskugeln, Glasfasern oder Kohlenstofffasern, eingesetzt. Die mittleren Teilchendurchmesser bzw. bei faserförmigen Füllstoffen die Länge der Fasern sollte im Bereich der Zellgröße oder kleiner sein. Bevorzugt wird ein mittlerer Teilchendurchmesser bzw. eine mittlere Länge der Fasern im Bereich von 0,1 bis 100 µm, bevorzugt im Bereich von 1 bis 50 µm. Bevorzugt sind expandierbare, treibmittelhaltige thermoplastische Polyurethane, die zwischen 5 bis 80 Gew.-% organische und/oder anorganische Füllstoffe enthalten, bezogen auf das Gesamtgewicht des treibmittelhaltigen thermoplastischen Polyurethans.

Oberflächenaktive Substanzen, die in der thermoplastischen Formmasse enthalten sein können, sind zum Beispiel Verbindungen, die zur Unterstützung der Homogenisierung der Ausgangsstoffe dienen und gegebenenfalls auch geeignet sind, die Zellstruktur zu regulieren. Geeignete oberflächenaktive Substanzen sind zum Beispiel Emulgatoren, beispielsweise Natriumsalze von Rizinusölsulfaten oder von Fettsäuren sowie Salze von Fettsäuren mit Aminen, beispielsweise ölsaures Diethylamin, stearinsaures Diethanolamin, ricinolsaures Diethanolamin, Salze von Sulfonsäuren, beispielsweise Alkali- oder Ammoniumsalze von Dodecylbenzol- oder Dinaphthylmethandisulfonsäure und Rizinolsäure; Schaumstabilisatoren wie Siloxanoxalkylen-Mischpolymerisate und andere Organosiloxane, oxethylierte Alkylphenole, oxethylierte Fettalkohole, Paraffinöle, Rizinusöl- bzw. Rizinolsäureester, Türkisschrotöl und Erdnussöl und Zellregler, beispielsweise Paraffine, Fettalkohole und Dimethylpolysiloxan. Zur Verbesserung der Emulgierwirkung, der Zellstruktur und/oder deren Stabilisierung eignen sich ferner oligomere Polyacrylate mit Polyoxalkylen- und Fluoralkanresten als Seitengruppen. Die oberflächenaktiven Substanzen werden üblicherweise in Mengen von 0,01 bis 5 Gew.-%, bezogen auf 100 Gew.-% der Verbindung mit mindestens 2 mit Isocyanatgruppen reaktiven wasserstoffhaltigen Gruppen eingesetzt.

Geeignete Flammschutzmittel sind beispielsweise Tricresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)ethylendiphosphat. Außer den bereits genannten halogensubstituierten Phosphaten können auch anorganische Flammschutzmittel mit rotem Phosphor, Aluminiumoxidhydrat, Antimontrioxid, Arsentrioxid, Ammoniumpolyphosphat und Calciumsulfat oder Cyanursäurederivate, beispielsweise Melamin oder Mischungen aus mindestens zwei Flammschutzmitteln, zum Beispiel Ammoniumphosphat und Melamin sowie gegebenenfalls Stärke und/oder Blähgraphit zum Flammfestmachen der hergestellten geschäumten Polyurethane verwendet werden. Im Allgemeinen hat es sich als zweckmäßig erwiesen, 0 bis 50 Gew.-%, vorzugsweise 5 bis 25 Gew.-% der Flammschutzmittel oder Flammschutzmittelmischungen für jeweils 100 Gew.-Teile des Diisocyanats, der Verbindungen mit mindestens zwei mit Isocyanatgruppen reaktiven wasserstoffhaltigen Gruppen und der Kettenverlängerer einzusetzen.

Vor dem Einpressen der Polymerschmelze in die Granulierkammer, wird diese mit dem Treibmittel CO₂ und/oder N₂, besonders bevorzugt einer Kombination aus CO₂ und N₂, gemischt. Zusätzlich kann der Polymerschmelze ein Co-Treibmittel zugegeben werden. Als Co-Treibmittel können Alkane wie Ethan, Propan, Butan, Pentan, Alkohole wie Ethanol, Isopropanol, halogenierte Kohlenwasserstoffe oder FCKW's oder eine Mischung daraus dienen. Der alleinige Einsatz von CO₂ und/oder N₂ sowie deren Kombination als Treibmittel ist besonders vorteilhaft, da es sich um Inertgase handelt, die unbrennbar sind, so dass bei der Produktion keine explosionsgefährdenden Atmosphären entstehen können. Dadurch werden kostenintensive Sicherheitsvorkehrungen unnötig und das Gefahrenpotential bei der Herstellung stark reduziert. Ebenfalls vorteilhaft ist, dass keine Auslagerzeit der Produkte aufgrund des Ausdampfens von flüchtigen brennbaren Stoffen erforderlich ist.

Weitere Vorteile ergeben sich, wenn der treibmittelhaltigen Polymerschmelze zusätzlich ein oder mehrere Nukleierungsmittel zugegegeben werden. Als Nukleierungsmittel eignen sich insbesondere Talkum, Calciumfluorid, Natriumphenylphosphinat, Aluminiumoxid, Ruß, Graphit, Pigmente und feinteiliges Polytetrafluorethylen jeweils einzeln oder auch in beliebigen Mischungen. Besonders bevorzugt als Nukleierungsmittel ist Talkum. Der Anteil an Nukleierungsmittel bezogen auf die Gesamtmasse der thermoplastischen Formmasse bzw. der Polymerschmelze liegt vorzugsweise bei 0 bis 4 Gew.-%, insbesondere bei 0,1 bis 2 Gew.-%.

Im Folgenden wird die Erfindung anhand der Zeichnungen näher beschrieben. Die einzige Figur zeigt eine schematische Darstellung einer Vorrichtung zur Granulierung von Polymerschmelzen.

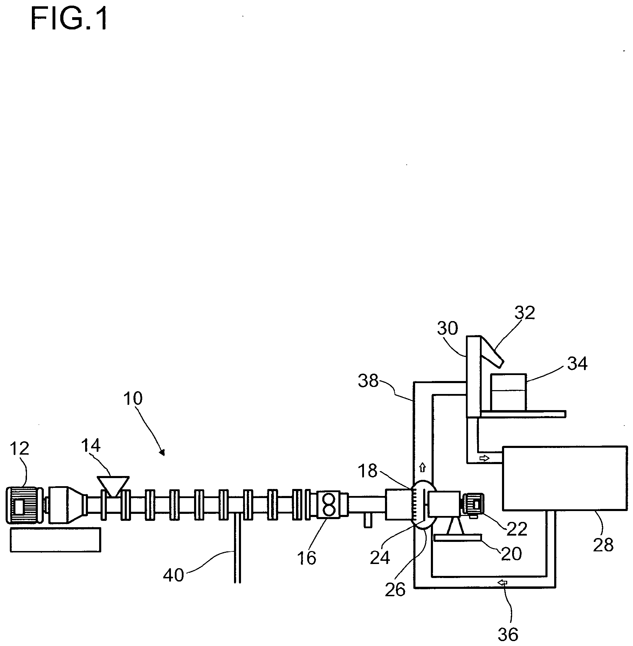

Figur 1 zeigt eine schematische Darstellung einer Vorrichtung zur Herstellung von expandiertem Granulat aus einer treibmittelhaltigen Polymerschmelze. Das Ausgangspolymer wird über einen Aufgabetrichter 14 in einen Extruder 10 eingegeben. Der Extruder 10 ist beispielsweise als Doppelschneckenextruder ausgeführt und wird über einen Motor 12 angetrieben. Über den Aufgabetrichter 14 können des Weiteren Hilfsstoffe wie beispielsweise Farbstoffe oder Nukleierungsmittel zugegeben werden. Ein geeignetes Polymer ist thermoplastisches Polyurethan und ein geeignetes Nukleierungsmittel ist beispielsweise Talkum. Das eingegebene Rohmaterial wird im Extruder aufgeschmolzen und plastifiziert. Dabei wird das Material in Richtung einer Lochplatte 18 transportiert.

In der in Figur 1 dargestellten Ausführungsform ist vor der Lochplatte 18 eine Schmelzepumpe 16 angeordnet, mit der die Schmelze mit einem Druck beaufschlagt wird. Der Druck wird abhängig von der Art und Menge des verwendeten Treibmittels gewählt. Das Treibmittel wird über eine Zugabestelle 40, die sich zwischen dem Aufgabetrichter 14 und der Schmelzepumpe 16 am Extruder 10 befindet in die Polymerschmelze eingegeben. In der dargestellten Ausführungsform ist die Zugabestelle 40 für das Treibmittel so angeordnet, dass das Treibmittel erst nach dem Aufschmelzen des gesamten Polymers zugegeben wird. Auf der restlichen Extruderstrecke wird das eingegebene Treibmittel in die Schmelze eingearbeitet. Ein geeignetes Treibmittel ist beispielsweise eine Mischung aus Kohlenstoffdioxid und Stickstoff.

Aufgrund der Schmelzepumpe 16 wird die Schmelze durch die Lochplatte 18 in eine Granulierkammer 26 gedrückt. Die Granulierkammer wird von einer Flüssigkeit durchströmt, deren Druck oberhalb des Umgebungsdrucks liegt. Die Strömung ist mit den Pfeilen 36 angedeutet. In der Granulierkammer 26 ist ein rotierendes Messer 24 in einer Granulierungseinrichtung 20 angeordnet. Das rotierende Messer 24 wird dabei von einem Motor 22 angetrieben. Die Polymerschmelze tritt aus der Lochplatte 18 in Form von mehreren expandierenden Polymersträngen heraus, die durch das rotierende Messer 24 abgeschnitten werden. Dabei entstehen einzelne expandierende Granulatkörner. Der Einpressdruck sowie die Geschwindigkeit der Schneidevorrichtung sind dabei so gewählt, dass die Form der Granulatkörner im Wesentlichen sphärisch ist.

In der temperierten Flüssigkeit werden die Granulatkörner durch das enthaltende Treibmittel expandiert, wobei die Temperatur der temperierten Flüssigkeit, der temperierten Lochplatte sowie der Druck der temperierten Flüssigkeit so gewählt sind, dass die expandierten Granulatkörner eine geschlossene Schaumhaut aufweisen. Durch die Strömung der temperierten Flüssigkeit werden die entstandenen expandierenden bzw. expandierten Granulatkörner aus der Granulierkammer 26 ausgetragen und über die Kreislaufleitung 38 einem Trockner 30 zugeführt. Im Trockner 30 werden die expandierten Granulatkörner von der temperierten Flüssigkeit getrennt und getrocknet und über den Produktaustrag 32 in einen Auffangbehälter 34 gegeben. Die vom Granulat befreite temperierte Flüssigkeit strömt über die Kreislaufleitung 38 weiter in eine Kreislaufpumpe 28, wo die temperierte Flüssigkeit gefiltert, temperiert und mit Druck beaufschlagt wird. Von der Kreislaufpumpe 28 strömt die temperierte Flüssigkeit zurück in die Granulierkammer 26.

Die Erfindung soll an nachfolgenden Beispielen näher erläutert werden:

### Beispiel 1

In einem Doppelschneckenextruder mit einem Schneckendurchmesser von 18 mm und einem Verhältnis von Länge zu Durchmesser von 40 werden 99,5 Gewichtsanteile eines thermoplastischen Polyurethans (TPU), hergestellt aus 61,1 Gew.-% Polytetrahydrofuran mit einem mittlerem Molekulargewicht (MW) von 1000 g/mol, 31,7 Gew.-% 4,4-Diphenylmethandiisocyanat, 5,7 Gew.-% 1,4-Butandiol, 1,0 Gew.-% eines phenolischen Antioxidans und 0,5 Gew.-% UV-Stabilisator, wobei das TPU beispielsweise erhältlich ist unter dem Handelsnamen Elastollan 1180 A 10U ® von der BASF SE, und 0,5 Gewichtsanteile Talkum dosiert. Das thermoplastische Polyurethan wurde in der Aufschmelzzone des Doppelschneckenextruders aufgeschmolzen und mit dem Talkum gemischt. Nach dem Aufschmelzen des thermoplastischen Polyurethans und dem Einmischen des Talkums wurden die Treibmittel CO₂ und N₂ in den in Tabelle 1 aufgeführten Mengen zugegeben. Beim Durchlaufen der restlichen Extruderstrecke wurden das Treibmittel und die Polymerschmelze miteinander vermischt, so dass sich eine homogene Mischung bildet. Der Gesamtdurchsatz des Extruders, welcher das TPU, das Talkum und beide Treibmittel beinhaltet, betrug 3,5 kg/h. Die Temperatur im Extruder in der Aufschmelzzone und während der Einmischung des Talkums in das TPU betrug 220°C. Die Temperatur am Extrudergehäuse der Injektionsstelle wurde auf 200 °C und das nachfolgende Gehäuse auf 190 °C herabgesetzt. Alle weiteren Gehäuseteile bis zum Extruderende sowie die Schmelzepumpe wurden auf 180 °C gehalten. Über die Schmelzepumpe wurde ein Druck am Ende des Extruders von 90 bar eingestellt. Die Temperatur des Anfahrventils wurde auf 210 °C eingestellt und die Lochplatte über eine elektrische Heizung auf eine Solltemperatur von 260 °C geheizt. Das aus der Lochplatte austretende Gemisch aus TPU, Talkum und Treibmittel wurde durch die Lochplatte mit einem Loch der Größe 1 mm gedrückt und in der dahinter liegenden von Wasser durchströmten Granulierkammer durch 10 rotierende an einem Messerkranz befestigte Messer abgeschlagen. Während des Aufenthalts des Gemisches in der Granulierkammer expandiert dieses. Dabei wurden Partikel mit einer durchschnittlichen Größe von ca. 2 mm und einem Gewicht von ca. 2 mg hergestellt. Die weiteren variierten Parameter sowie die erzielten Schüttdichten sind in der nachfolgenden Tabelle 1 aufgelistet. Zur Bestimmung der Schüttdichte wurde ein 100 ml Gefäß mit den expandierten Partikeln gefüllt und das Gewicht mittels einer Waage bestimmt. Dabei kann von einer Genauigkeit von ± 5 g/l ausgegangen werden.

**Tabelle 1**

| CO₂ | N₂ | P(Wasser) | T(Wasser) | Schüttdichte |
|---|---|---|---|---|
| *(Gew. Anteile)* | *(Gew. Anteile)* | *(bar)* | *(°C)* | *(g*/*l)* |
| 4 | 0 | 1 | 40 | 370 |
| 4 | 0 | 6 | 40 | 445 |
| 4 | 0 | 10 | 42 | 395 |
| 4 | 0 | 15 | 46 | 225 |
| 2 | 0 | 15 | 49 | 110 |
| 2 | 0 | 10 | 47 | 130 |
| 2 | 0 | 6 | 42 | 170 |
| 2 | 0 | 1 | 41 | 340 |
| 1,5 | 0 | 1 | 40 | 330 |
| 1,5 | 0 | 6 | 39 | 140 |
| 1,5 | 0 | 10 | 41 | 150 |
| 1,5 | 0 | 15 | 46 | 150 |
| 1,5 | 0 | 10 | 50 | 135 |
| 1,5 | 0 | 6 | 50 | 160 |
| 1,5 | 0 | 1 | 50 | 340 |
| 3 | 0 | 10 | 32 | 150 |
| 3 | 0 | 15 | 34 | 130 |
| 2,5 | 0 | 10 | 33 | 120 |
| 2,5 | 0 | 15 | 32 | 130 |
| 2 | 0 | 15 | 32 | 150 |
| 2 | 0 | 10 | 32 | 130 |
| 1,5 | 0 | 10 | 32 | 200 |
| 1,5 | 0 | 15 | 32 | 220 |
| 2 | 0 | 15 | 40 | 115 |
| 2,5 | 0,15 | 15 | 40 | 100 |
| 2,5 | 0,15 | 10 | 40 | 285 |
| 2,5 | 0,15 | 10 | 30 | 250 |
| 2,5 | 0,15 | 15 | 30 | 110 |
| 2 | 0,15 | 10 | 30 | 115 |
| 2 | 0,15 | 15 | 30 | 125 |
| 1,5 | 0,15 | 10 | 30 | 150 |
| 1,5 | 0,15 | 15 | 30 | 150 |
| 1,5 | 0,3 | 15 | 30 | 130 |
| 2 | 0,3 | 15 | 30 | 120 |
| 2,5 | 0,3 | 15 | 30 | 95 |
| 2,5 | 0,3 | 10 | 30 | 285 |
| 2,5 | 0,3 | 12 | 30 | 150 |
| 2,5 | 0,15 | 15 | 30 | 180 |
| 2 | 0,15 | 15 | 30 | 160 |
| 1,5 | 0,15 | 15 | 30 | 140 |

### Beispiel 2

Der Verfahrensablauf entspricht dem zum Beispiel 1 beschriebenen, jedoch wurden die Temperatur im Extruder in der Aufschmelzzone und während der Einmischung des Talkums in das TPU auf 230°C und die Temperatur aller nachfolgenden Extrudergehäuseteile und der Schmelzepumpe auf 200 °C gesetzt. Die Temperatur des Anfahrventils betrug weiterhin 210 °C und die Temperatur der temperierten Lochplatte wurde abweichend zu Beispiel 1 auf 250 °C gesetzt. Die Versuche wurden sowohl mit CO₂ als Treibmittel ohne Zusatz von Stickstoff als auch mit einer zusätzlich 0,3 Gew. Anteile N₂ enthaltenden Mischung als Treibmittel durchgeführt. Als Ergebnis wurden wiederum Partikel mit einer Partikelgröße von ca. 2 mm und einem Gewicht von ca. 2 mg erhalten. Die dosierten Gewichtsanteile der Treibmittel sowie der Druck und die Temperatur der temperierten Flüssigkeit in der Granulierkammer und die erzielten Schüttdichten sind in Tabelle 2 zusammengefasst.

**Tabelle 2**

| CO₂ | N₂ | P(Wasser) | T(Wasser) | Schüttdichte |
|---|---|---|---|---|
| *(Gew. Anteile)* | *(Gew. Anteile)* | *(bar)* | *(°C)* | *(g*/*l)* |
| 1,25 | 0 | 1 | 30 | 160 |
| 1,25 | 0 | 5 | 30 | 160 |
| 1,25 | 0 | 10 | 30 | 200 |
| 1,25 | 0 | 15 | 30 | 230 |
| 1,25 | 0,3 | 1 | 30 | 360 |
| 1,25 | 0,3 | 5 | 30 | 165 |
| 1,25 | 0,3 | 10 | 30 | 105 |
| 1,25 | 0,3 | 15 | 30 | 100 |
| 1,0 | 0 | 1 | 30 | 160 |
| 1,0 | 0 | 5 | 30 | 325 |
| 1,0 | 0 | 10 | 30 | 440 |
| 1,0 | 0 | 15 | 30 | 495 |
| 1,0 | 0,3 | 1 | 30 | 350 |
| 1,0 | 0,3 | 5 | 30 | 130 |
| 1,0 | 0,3 | 10 | 30 | 100 |
| 1,0 | 0,3 | 15 | 30 | 95 |
| 0,75 | 0 | 1 | 30 | 180 |
| 0,75 | 0 | 5 | 30 | 440 |
| 0,75 | 0 | 10 | 30 | 550 |
| 0,75 | 0 | 15 | 30 | 520 |
| 0,75 | 0,3 | 1 | 30 | 345 |
| 0,75 | 0,3 | 5 | 30 | 345 |
| 0,75 | 0,3 | 10 | 30 | 120 |
| 0,75 | 0,3 | 15 | 30 | 105 |
| 0,5 | 0 | 1 | 30 | 265 |
| 0,5 | 0 | 5 | 30 | 525 |
| 0,5 | 0 | 10 | 30 | 525 |
| 0,5 | 0 | 15 | 30 | 530 |
| 0,5 | 0,3 | 1 | 30 | 345 |
| 0,5 | 0,3 | 5 | 30 | 115 |
| 0,5 | 0,3 | 10 | 30 | 105 |
| 0,5 | 0,3 | 15 | 30 | 100 |

### Beispiel 3

Der Verfahrensablauf entspricht dem zum Beispiel 2 beschriebenen, jedoch wurde als Treibmittel Iso-Pentan verwendet. Bei einem als Vergleichsversuche dienenden Teil wurde lediglich Iso-Pentan als Treibmittel verwendet. Diese Versuche wurden anschließend mit einer Treibmittelmischung, die zusätzlich 0,3 Gew. Anteile N₂ enthält, wiederholt. Als Ergebnis wurden wiederum Partikel mit einer Partikelgröße von ca. 2 mm und einem Gewicht von ca. 2 mg erhalten. Die dosierten Gewichtsanteile der Treibmittel sowie der Druck und die Temperatur der temperierten Flüssigkeit in der Granulierkammer und die erzielten Schüttdichten sind in Tabelle 3 zusammengefasst. Hierbei hat sich gezeigt, dass bei Zugabe von Iso-Pentan ohne Zusatz von Stickstoff keine Dichten von weniger als 200g/l erreicht werden können.

**Tabelle 3**

| Iso-Pentan | N₂ | P(Wasser) | T(Wasser) | Schüttdichte |
|---|---|---|---|---|
| *(Gew. Anteile)* | *(Gew. Anteile)* | *(bar)* | *(°C)* | *(g*/*l)* |
| 4,0 | 0 | 1 | 30 | 385 |
| 4,0 | 0 | 5 | 30 | 400 |
| 4,0 | 0 | 10 | 30 | 445 |
| 4,0 | 0 | 15 | 30 | 420 |
| 4,0 | 0,3 | 1 | 30 | 375 |
| 4,0 | 0,3 | 5 | 30 | 150 |
| 4,0 | 0,3 | 10 | 30 | 100 |
| 4,0 | 0,3 | 15 | 30 | 95 |
| 3,0 | 0 | 1 | 30 | 280 |
| 3,0 | 0 | 5 | 30 | 450 |
| 3,0 | 0 | 10 | 30 | 440 |
| 3,0 | 0 | 15 | 30 | 420 |
| 3,0 | 0,3 | 1 | 30 | 405 |
| 3,0 | 0,3 | 5 | 30 | 135 |
| 3,0 | 0,3 | 10 | 30 | 100 |
| 3,0 | 0,3 | 15 | 30 | 95 |

### Beispiel 4

Der Verfahrensablauf entspricht dem zum Beispiel 2 beschriebenen, jedoch wurden als TPU eine Zusammensetzung hergestellt aus 61,2 Gew.-% Polytetrahydrofuran mit einem mittlerem Molekulargewicht (MW) von 1000 g/mol, 31,9 Gew.-% 4,4-Diphenylmethandiisocyanat, 5,9 Gew.-% 1,4 Butandiol und 1,00 Gew.-% eines phenolischen Antioxidans, wobei das TPU beispielsweise erhältlich ist unter dem Handelsnamen Elastollan SP 9213 10 ® der BASF SE, und eine Zusammensetzung hergestellt aus 47,9 Gew.-% Ethylenglykol/Butandiol-adipat, 39,7 Gew.-% 4,4-Diphenylmethandiisocyanat, 12,1 Gew.-% 1,4-Butandiol und 0,3 Gew.-% eines Hydrolysestabilisators, wobei das TPU beispielsweise erhältlich ist unter dem Handelsnamen Elastollan S98A® der BASF SE, verwendet. Die TPU's wurden zusammen mit 0,5 Gewichtsanteilen Talkum dosiert. Als Treibmittel wurden CO₂ in unterschiedlichen Gewichtsanteilen und in allen Einstellungen 0,3 Gewichtsanteile N₂ verwendet. Als Ergebnis wurden wiederum Partikel mit einer Partikelgröße von ca. 2 mm und einem Gewicht von ca. 2 mg erhalten. Das verwendete TPU, die Gewichtsanteile des dosierten CO₂ sowie der Druck und die Temperatur der temperierten Flüssigkeit in der Granulierkammer und die erzielten Schüttdichten sind in Tabelle 4 zusammengefasst.

**Tabelle 4**

| TPU | CO₂ (Gew. Anteile) | P (Wasser) | T(Wasser) | Schüttdichte |
|---|---|---|---|---|
| | | (bar) | (°C) | (g/l) |
| SP 9213 10 | 2,5 | 5 | 29 | 335 |
| SP 9213 10 | 2,5 | 15 | 32 | 100 |
| SP 9213 10 | 1,5 | 15 | 31 | 125 |
| SP 9213 10 | 1,5 | 10 | 29 | 120 |
| SP 9213 10 | 1,5 | 5 | 28 | 255 |
| SP 9213 10 | 1,5 | 1 | 29 | 435 |
| SP 9213 10 | 1,0 | 10 | 26 | 145 |
| S98A | 2,5 | 5 | 30 | 220 |
| S98A | 2,5 | 15 | 32 | 200 |
| S98A | 1,5 | 15 | 32 | 230 |
| S98A | 1,5 | 10 | 30 | 205 |
| S98A | 1,5 | 5 | 29 | 170 |
| S98A | 1,5 | 1 | 30 | 365 |
| S98A | 1,0 | 10 | 30 | 240 |

### Beispiel 5

In einem Doppelschneckenextruder mit einem Schneckendurchmesser von 81 mm und einem Verhältnis von Länge zu Durchmesser von 35 werden 99,8 Gewichtsanteile des thermoplastischen Polyurethans Elastollan 1180 A 10U® und 0,2 Gewichtsanteile Talkum dosiert. Das TPU wurde in der Aufschmelzzone des Doppelschneckenextruders aufgeschmolzen und mit dem Talkum gemischt. Nach der Aufschmelzen des TPUs und dem Einmischen des Talkum wurde das Treibmittel CO₂ in den in Tabelle 5 aufgeführten Mengen injiziert. Beim Durchlaufen der restlichen Extruderstrecke wurden das Treibmittel, Polymerschmelze und das Talkum miteinander vermischt, so dass sich eine homogene Mischung bildet. Der Gesamtdurchsatz des Extruders, welcher das TPU, das Talkum und das Treibmittel beinhaltet, betrug 140,3 kg/h. Die Temperatur im Extruder in der Aufschmelzzone und während der Einmischung des Talkums in das TPU betrug 205°C. Die Temperatur am Extrudergehäuse der Injektionsstelle wurde auf 200 °C und die nachfolgenden Gehäuse auf 175 °C herabgesetzt. Der Adapter, welcher den Übergang zwischen Extruder und Schmelzekanal darstellt, wurde auf 180°C temperiert. Die Temperatur des erstes Anfahrventils, der Schmelzepumpe, des Adapters zwischen Schmelzepumpe und zweitem Anfahrventil sowie das zweite Anfahrventil wurden auf 160°C eingestellt. Der Filter, der Adapter zwischen Filter und Lochplatte und die Lochplatte wurden mit einer elektrischen Heizung auf eine Solltemperatur von 200°C geheizt. Über die Schmelzepumpe wurde ein Druck am Ende des Extruders von 90 bar eingestellt. Das aus der Lochplatte austretende Gemisch aus TPU, Talkum und Treibmittel wurde durch die Lochplatte mit zwölf Löchern der Größe 1,8 mm gedrückt und in der dahinter liegenden von Wasser durchströmten Granulierkammer durch 6 rotierende an einem Messerkranz befestigte Messer abgeschlagen. Während des Aufenthalts des Gemisches in der Granulierkammer expandiert dieses. Dabei wurden Partikel mit einer durchschnittlichen Größe von ca. 6 mm und einem Gewicht von ca. 22 mg hergestellt. Die weiteren variierten Parameter sowie die erzielten Schüttdichten sind in der nachfolgenden Tabelle 5 aufgelistet. Zur Bestimmung der Schüttdichte wurde ein 10 I Gefäß mit den expandierten Partikeln gefüllt und das Gewicht mittels einer Waage bestimmt. Dabei kann von einer Genauigkeit von ± 5 g/l ausgegangen werden.

**Tabelle 5**

| CO₂ | P(Wasser) | T(Wasser) | Schüttdichte (g/l) |
|---|---|---|---|
| (Anteile) | (bar) | (°C) | |
| 1,1 | 2 | 35 | 155 |
| 1,3 | 2 | 35 | 140 |
| 1,3 | 2 | 20 | 140 |
| 1,4 | 2 | 20 | 150 |
| 1,8 | 6 | 20 | 180 |
| 2,1 | 6 | 20 | 155 |
| 2,5 | 6 | 20 | 130 |

### Beispiel 6

Der Verfahrensablauf entspricht dem zum Beispiel 5 beschriebenen, jedoch wurden 99,3 Gewichtsanteile des thermoplastischen Polyurethans Elastollan 1180 A 10U® und 0,7 Gewichtsanteile Talkum dosiert. Die Temperatur des Adapters vor der Lochplatte wurde auf 190°C gesetzt und die Temperatur der Lochplatte auf 180°C gesetzt. Alle weiteren Temperaturen entsprechen denen in Beispiel 5. Über die Schmelzepumpe wurde ein Druck am Ende des Extruders von 60 bar eingestellt. Das aus der Lochplatte austretende Gemisch aus Elastollan, Talkum und Treibmittel wurde durch die Lochplatte mit sechs Löchern der Größe 2,4 mm gedrückt und in der dahinter liegenden von Wasser durchströmten Granulierkammer durch 6 rotierende an einem Messerkranz befestigte Messer abgeschlagen. Als Ergebnis wurden Partikel mit einer Partikelgröße von ca. 7 mm und einem Gewicht von ca. 33 mg erhalten.
Die dosierten Gewichtsanteile der Treibmittel sowie der Druck und die Temperatur der temperierten Flüssigkeit in der Granulierkammer und die erzielten Schüttdichten sind in Tabelle 6 zusammengefasst.

**Tabelle 6**

| CO₂ | P(Wasser) | T(Wasser) | Schüttdichte (g/l) |
|---|---|---|---|
| (Anteile) | (bar) | (°C) | |
| 0,9 | 2 | 25 | 150 |
| 0,9 | 10 | 25 | 175 |

### Beispiel 7

In einem Doppelschneckenextruder mit einem Schneckendurchmesser von 44 mm und einem Verhältnis von Länge zu Durchmesser von 30 werden 100 Gewichtsanteile des thermoplastischen Polyurethans (TPU) Elastollan 1180 A 10U® dosiert. Das TPU wurde in der Aufschmelzzone des Doppelschneckenextruders aufgeschmolzen. Nach dem Aufschmelzen des TPUs in der Aufschmelzzone des Doppelschneckenextruders wurde das Treibmittel Iso-Butan in den in Tabelle 7 aufgeführten Mengen in den Extruder injiziert. Beim Durchlaufen der restlichen Extruderstrecke wurden das Treibmittel und die Polymerschmelze miteinander vermischt, so dass sich eine homogene Mischung bildet. Der Gesamtdurchsatz des Extruders, welcher das TPU und das Treibmittel beinhaltet, betrug 65 kg/h. Die Temperatur im Extruder in der Aufschmelzzone betrug 205°C. Die Temperatur am Extrudergehäuse der Injektionsstelle wurde auf 190 °C und das nachfolgende Gehäuse auf 170 °C herabgesetzt. Alle weiteren Gehäuse bis zum Extruderende sowie die Schmelzepumpe wurden auf 170 °C gehalten. Über die Schmelzepumpe wurde ein Druck am Ende des Extruders von 50 bar eingestellt. Die Temperatur der Lochplatte wurde über eine elektrische Heizung auf eine Solltemperatur von 240 °C geheizt. Das aus der Lochplatte austretende Gemisch aus TPU und Treibmittel wurde durch die Lochplatte mit 12 Löchern der Größe 2,4 mm gedrückt und in der dahinter liegenden von Wasser durchströmten Granulierkammer durch 8 rotierende an einem Messerkranz befestigte Messer abgeschlagen. Während des Aufenthalts des Gemisches in der Granulierkammer expandiert dieses. Dabei wurden Partikel mit einer durchschnittlichen Größe von ca. 5 mm und einem Gewicht von ca. 15 mg hergestellt. Die weiteren variierten Parameter sowie die erzielten Schüttdichten sind in der nachfolgenden Tabelle 7 aufgelistet. Zur Bestimmung der Schüttdichte wurde ein 10 I Gefäß mit den expandierten Partikeln gefüllt und das Gewicht mittels einer Waage bestimmt. Dabei kann von einer Genauigkeit von ± 5 g/l ausgegangen werden.

**Tabelle 7**

| Iso-Butan | P(Wasser) | T(Wasser) | Schüttdichte |
|---|---|---|---|
| *(Gew. Anteile)* | *(bar)* | *(°C)* | *(g*/*l)* |
| 2,2 | 2 bar | 30 | 140 |
| 2,1 | 2 bar | 30 | 120 |
| 3 | 2 bar | 30 | 115 |
| 3 | 2 bar | 30 | 100 |
| 3 | 2 bar | 30 | 110 |

### Beispiel 8

Der Verfahrensablauf entspricht dem zum Beispiel 6 beschriebenen, jedoch wurde die Lochplatte getauscht (12 Löcher á 2,8 mm) und die Versuche aus Tabelle 6 wiederholt. Als Ergebnis wurden wiederum Partikel mit einer Partikelgröße von ca. 5 mm und einem Gewicht von ca. 15 mg erhalten. Die dosierten Gewichtsanteile der Treibmittel sowie der Druck und die Temperatur der temperierten Flüssigkeit in der Granulierkammer und die erzielten Schüttdichten sind in Tabelle 8 zusammengefasst.

**Tabelle 8**

| Iso-Butan | P(Wasser) | T(Wasser) | Schüttdichte |
|---|---|---|---|
| *(Gew. Anteile)* | *(bar)* | *(°C)* | *(g*/*l)* |
| 2,5 | 2 bar | 30 | 124 |
| 2,5 | 2 bar | 30 | 125 |

### Bezugszeichenliste

- 10: Extruder
- 12: Motor
- 14: Aufgabetrichter
- 16: Schmelzepumpe
- 18: Lochplatte
- 20: Granulierer
- 22: Antrieb Granulierer
- 24: Messer
- 26: Granulierkammer
- 28: Kreislaufpumpe
- 30: Trockner
- 32: Produktaustrag
- 34: Auffangbehälter
- 36: Strömungsrichtung
- 38: Kreislaufleitung
- 40: Zugabe Treibmittel

## Patentansprüche

1. Verfahren zur Herstellung von expandiertem Granulat aus einer treibmittelhaltigen Polymerschmelze enthaltend ein thermoplastisches Polyurethan, umfassend die Schritte:
a) Pressen der treibmittelhaltigen Polymerschmelze durch eine auf eine Temperatur zwischen 150°C und 280 °C temperierte Lochplatte (18) in eine Granulierkammer (26),
b) Zerkleinern der durch die Lochplatte (18) gepressten Polymerschmelze mit einer Schneidevorrichtung (20) in einzelne expandierende Granulatkörner,
c) Austragen der Granulatkörner aus der Granulierkammer (26) mit einem Flüssigkeitsstrom (36),
**dadurch gekennzeichnet, dass** das Treibmittel CO₂ oder N₂ oder eine Kombination aus CO₂ und N₂ enthält und die Granulierkammer (26) von einer auf eine Temperatur zwischen 10 °C und 60 °C temperierten Flüssigkeit durchströmt wird, deren Druck 0,7 bar bis 20 bar oberhalb des Umgebungsdrucks liegt, wobei Druck und Temperatur der Flüssigkeit in der Granulierkammer (26), sowie die Temperatur der Lochplatte (18) so gewählt werden, dass die Granulatkörner in der unter Druck stehenden Flüssigkeit durch das enthaltene Treibmittel so expandiert werden, dass expandierte Granulatkörner mit einer geschlossenen Haut entstehen, wobei die Schüttdichte des expandierten Granulats zwischen 30 g/l und 250 g/l liegt und wobei die Temperatur der Flüssigkeit in der Granulierkammer (26) bei einer unkontrollierten Expansion des Granulats, bei der keine geschlossene Haut ausgebildet wird, gesenkt und bei ausbleibender oder zu geringer Expansion des Granulats erhöht wird und wobei die Temperatur der Lochplatte (18) bei einer unkontrollierten Expansion des Granulats, bei der keine geschlossene Haut ausgebildet wird, gesenkt und bei ausbleibender oder zu geringer Expansion des Granulats erhöht wird.

2. Verfahren nach Anspruch 1, **dadurch gekennzeichnet, dass** die treibmittelhaltige Polymerschmelze ein Nukleierungsmittel enthält.

3. Verfahren nach Anspruch 2, **dadurch gekennzeichnet, dass** das Nukleierungsmittel eine Größe zwischen 0,01 µm und 100 µm aufweist und ausgewählt ist aus Talkum, Calciumfluorid, Natriumphenylphosphinat, Aluminiumoxid, Ruß, Graphit, Pigmente, feinteiligem Polytetrafluorethylen oder einer Mischung daraus.

4. Verfahren nach einem der Ansprüche 1 bis 3, **dadurch gekennzeichnet, dass** das Treibmittel ein Co-Treibmittel enthält und wobei das Co-Treibmittel ausgewählt ist aus einem Alkan, einem Alkohol, einem halogenierten Kohlenwasserstoff oder einer Mischung daraus.

5. Verfahren nach einem der Ansprüche 1 bis 4, **dadurch gekennzeichnet, dass** die Masse eines Partikels des Granulats zwischen 2 mg und 40 mg liegt.

6. Verfahren nach einem der Ansprüche 1 bis 6, **dadurch gekennzeichnet, dass** die Partikel des Granulats eine Zellgröße kleiner 250 µm aufweisen.

## Claims

1. A process for production of expanded pellets from a polymer melt comprising a blowing agent and comprising a thermoplastic polyurethane, said process comprising the steps of:
a) pressing the polymer melt comprising a blowing agent through a perforated disk (18) controlled to a temperature between 150°C and 280°C and into a pelletizing chamber (26),
b) using a cutting device (20) to comminute the polymer melt pressed through the perforated disk (18) into individual expanding pellets,
c) discharging the pellets from the pelletizing chamber (26) using a liquid stream (36),
wherein the blowing agent comprises CO₂ or N₂ or a combination of CO₂ and N₂ and the pelletizing chamber (26) is traversed by a stream of liquid which is controlled to a temperature between 10°C and 60°C and the pressure of which is from 0.7 bar to 20 bar above ambient pressure, the pressure and temperature for the liquid in the pelletizing chamber (26) and also the temperature for the perforated disk (18) being chosen such that the pellets are expanded in the pressurized liquid by the blowing agent they contain so as to produce expanded pellets having an uninterrupted skin wherein the bulk density of the expanded pellets is between 30 g/l and 250 g/l and wherein the temperature of the liquid in the pelletizing chamber (26) is lowered when the pellets undergo an uncontrolled expansion which does not produce an uninterrupted skin and is raised when there is no or insufficient expansion of the pellets and wherein the temperature of the perforated disk (18) is lowered when the pellets undergo an uncontrolled expansion which does not produce an uninterrupted skin and is raised when there is no or insufficient expansion of the pellets.

2. The process according to claim 1 wherein the polymer melt comprising a blowing agent comprises a nucleating agent.

3. The process according to claim 2 wherein the nucleating agent has a size between 0.01 µm and 100 µm and is selected from talc, calcium fluoride, sodium phenylphosphinate, aluminum oxide, carbon black, graphite, pigments, finely divided polytetrafluoroethylene or a mixture thereof.

4. The process according to any of claims 1 to 3 wherein the blowing agent comprises a co-blowing agent and wherein the co-blowing agent is selected from an alkane, an alcohol, a halogenated hydrocarbon or a mixture thereof.

5. The process according to any of claims 1 to 4 wherein the mass of a bead of the pellets is between 2 mg and 40 mg.

6. The process according to any of claims 1 to 5 wherein the beads of the pellets have a cell size below 250 µm.

## Revendications

1. Procédé de fabrication d'un granulat expansé à partir d'une masse fondue de polymère contenant un agent gonflant, contenant un polyuréthane thermoplastique, comprenant les étapes suivantes :
a) le pressage de la masse fondue de polymère contenant un agent gonflant au travers d'une plaque perforée (18) conditionnée à une température comprise entre 150 °C et 280 °C dans une chambre de granulation (26),
b) le broyage de la masse fondue de polymère pressée au travers de la plaque perforée (18) avec un dispositif de découpe (20) en grains de granulat individuels qui s'expansent,
c) le déchargement des grains de granulat de la chambre de granulation (26) avec un courant de liquide (36),
**caractérisé en ce que** l'agent gonflant contient du CO₂ ou du N₂ ou une combinaison de CO₂ et de N₂, et la chambre de granulation (26) est traversée par un liquide conditionné à une température comprise entre 10 °C et 60 °C, dont la pression se situe 0,7 bar à 20 bar au-dessus de la pression ambiante, la pression et la température du liquide dans la chambre de granulation (26), ainsi que la température de la plaque perforée (18) étant choisies de telle sorte que les grains de granulat s'expansent dans le liquide sous pression grâce à l'agent gonflant contenu, de telle sorte que des grains de granulat expansés munis d'une peau fermée se forment, la densité apparente du granulat expansé étant comprise entre 30 g/l et 250 g/l, et la température du liquide dans la chambre de granulation (26) étant baissée en cas d'expansion incontrôlée du granulat, lors de laquelle une peau fermée n'est pas formée, et augmentée en cas d'expansion absente ou trop faible du granulat, et la température de la plaque perforée (18) étant baissée en cas d'expansion incontrôlée du granulat, lors de laquelle une peau fermée n'est pas formée, et augmentée en cas d'expansion absente ou trop faible du granulat.

2. Procédé selon la revendication 1, **caractérisé en ce que** la masse fondue de polymère contenant un agent gonflant contient un agent de nucléation.

3. Procédé selon la revendication 2, **caractérisé en ce que** l'agent de nucléation présente une taille comprise entre 0,01 µm et 100 µm, et est choisi parmi le talc, le fluorure de calcium, le phosphinate de phényle sodique, l'oxyde d'aluminium, le noir de carbone, le graphite, les pigments, le polytétrafluoroéthylène finement divisé ou un mélange de ceux-ci.

4. Procédé selon l'une quelconque des revendications 1 à 3, **caractérisé en ce que** l'agent gonflant contient un co-agent gonflant, et le co-agent gonflant est choisi parmi un alcane, un alcool, un hydrocarbure halogéné ou un mélange de ceux-ci.

5. Procédé selon l'une quelconque des revendications 1 à 4, **caractérisé en ce que** la masse d'une particule du granulat est comprise entre 2 mg et 40 mg.

6. Procédé selon l'une quelconque des revendications 1 à 5, **caractérisé en ce que** les particules du granulat présentent une taille de cellule inférieure à 250 µm.
